# DEMANDE DE BREVET EUROPEEN

(11) **EP 0 811 732 A1**
(43) Date de publication de la demande: **10.12.1997**
(21) Numéro de dépôt: 97109286.1
(22) Date de dépôt: 09.06.1997
(51) Int. Cl.: E04C 2/42, E03F 5/06, E03F 3/04, B66F 19/00, E02D 29/14

(54) **Grille de caniveau à montage et démontage rapide**

(30) Priorité: 07.06.1996 FR 9607095
(71) Demandeur: PREFAEST S.A., 21270 Pontailler s/Saône (FR)
(72) Inventeur: Corberant, Gérard, 70140 Pesmes (FR)
(74) Mandataire: Kügele, Bernhard

(57) **Abrégé**

La présente invention concerne une grille destinée à être, d'une manière générale, fixée de façon amovible sur un support, et, en particulier, sur un caniveau.

Cette grille (4) comporte au moins deux bras élastiques longitudinaux (41, 41') constitués d'au moins trois parties: une première partie (41a, 41a') formant un côté de la grille munie d'un ergot (6a, 6a'), une deuxième partie (41b, 41b') formant un coude avec la première, et une troisième partie (41c, 41c') formant un coude avec la seconde.

Cette structure particulière permet le montage et le démontage rapide, simple et facile de la grille, tout en assurant un maintien solide de cette-ci sur tout support.

## Description

La présente invention concerne une grille destinée à être d'une manière générale, fixée de façon amovible sur un support, et, en particulier, sur un caniveau, cette grille ayant une structure permettant un montage et un démontage facile et rapide. La présente invention concerne aussi un caniveau muni d'une grille, ainsi qu'un outil permettant le montage et le démontage rapide et facile de la grille sur le caniveau.

Les caniveaux en béton forment habituellement un conduit de section en U recouvert d'une ou plusieurs grilles en série reposant sur les bords profilés supérieurs des parois latérales verticales, ces bords pouvant être eux-mêmes recouverts d'un profilé métallique ayant un épaulement destiné à recevoir les bords longitudinaux de cette ou de ces grilles. Afin d'éviter l'enlèvement non-autorisé de ces grilles, il est nécessaire de prévoir des moyens pour les fixer aux caniveaux. Ces moyens de fixation doivent permettre à la grille fixée sur le caniveau de supporter une charge importante sans que la grille ne bouge sur l'épaulement du profilé métallique. Ces grilles doivent aussi pouvoir être enlevées facilement par les services d'entretien munis de moyens adéquats, afin qu'ils puissent procéder au nettoyage régulier des caniveaux.

Pour résoudre ce problème, on a généralement eu recours à des moyens de fixation tels que des vis ou similaires. Toutefois, l'utilisation des vis est peu pratique puisque pour obtenir une bonne stabilité des grilles sur le caniveau, il est nécessaire de prévoir plusieurs vis par grille et lorsqu'il faut procéder au changement d'une grille ou à l'enlèvement d'une grille pour le nettoyage, il est alors nécessaire d'enlever les vis une à une avant d'ôter la grille puis de remettre les vis une à une séparément pour fixer la nouvelle grille ou refixer la grille. Cette opération longue et fastidieuse, peut devenir difficile si la vis est usée ou rouillée, ou si la douille recevant la vis est usée, rouillée ou contient des salissures. Dans ce dernier cas, il devient alors malaisé dé revisser la vis complètement et celle-ci peut dépasser légèrement ce qui peut devenir problématique lors du passage d'un véhicule lourd.

La présente invention permet de résoudre ces problèmes en proposant une grille pour caniveau ou autre, celle-ci pouvant être bloquée fermement et sans jeu sans la présence de vis ou de tout autre moyen de fixation rapporté, et peut être montée et démontée de manière rapide et facile.

Un des objets principaux de la présente invention concerne une grille, de préférence en fonte, destinée à être appliquée de façon amovible dans un support extérieur, et en particulier sur les extrémités supérieures des parois latérales d'un caniveau muni d'évidements dans leurs faces intérieures, et caractérisé en ce qu'elle comporte au moins deux barreaux ayant une extrémité libre formant deux bras élastiques longitudinaux au moins essentiellement dans le plan de la grille, eux-mêmes comportant trois parties; une première partie formant un côté de la grille, dont l'une des extrémités est solidaire du corps de la grille, l'autre extrémité étant munie d'un ergot prévu pour coopérer avec le support extérieur, ou avec les évidements du caniveau, grâce à la pression du bras élastique sur le support, une deuxième partie formant un coude avec la première, une troisième partie formant un coude avec la seconde.

La forme particulière de ces bras élastiques permet, par l'action d'un levier, d'engager et de désengager les ergots de fixation de la grille sur son support, et cela de manière simple et rapide.

Les ergots de cette grille sont constitués de préférence d'une face supérieure horizontale ou inclinée et d'une face inférieure inclinée, en forme de rampe, pour un meilleur maintien sans jeu sur le support ou le caniveau. La grille peut comporter par ailleurs, au moins deux autres ergots sur son autre côté, situés sur des bras élastiques ou des barreaux rigides latéraux.

Un autre objet principal de la présente invention concerne un caniveau, de préférence en béton armé, comportant un fond et deux parois latérales dont les extrémités supérieures sont recouvertes d'un profilé métallique ayant un épaulement destiné à recevoir les bords longitudinaux d'une ou de plusieurs grilles, qui se caractérise par le fait que lesdits profilés métalliques comportent dans leurs parois verticales au-dessus de leurs épaulements, des évidements s'étendant dans les parois en béton du caniveau, et par le fait que la grille possède au moins deux barreaux ayant une extrémité libre formant deux bras élastiques, ces bras élastiques étant au moins essentiellement dans le plan de la grille et comportant au moins trois parties, une première partie formant un côté de la grille, dont l'une des extrémités est solidaire du corps de la grille, l'autre extrémité comportant un ergot prévu pour coopérer avec les évidements du caniveau, ces bras et/ou ces ergots possédant une forme telle que la coopération des ergots avec les surfaces intérieures des évidements produise un effet élastique de façon à ce que la grille soit maintenue élastiquement entre la surface supérieure de l'évidement et l'épaulement du profilé, une deuxième partie formant un coude avec la première, et une troisième partie formant un coude avec la deuxième.

Un perfectionnement de la grille pour caniveau, comme pour la grille sur support quelconque, consiste à incliner la surface supérieure des ergots de la grille de manière à éliminer le jeu éventuel entre la grille et son support/caniveau. Un autre perfectionnement éliminant ce jeu consiste à réaliser une grille dont les bras élastiques supportant les ergots seraient relevés par rapport au plan de la grille, de manière à ce que la grille soit maintenue en compression grâce à ses bras élastiques forcés, entre l'épaulement du profilé et la face supérieure de l'évidement.

La largeur de la grille au niveau des ergots est de préférence telle que la grille est maintenue élastiquement et, le cas échéant sans jeu entre les parois verticales des profilés du caniveau.

De préférence, les évidements du profilé sont constitués d'une face supérieure horizontale et d'une face inférieure inclinée destinées à coopérer respectivement avec les faces supérieures horizontales ou inclinées et les faces inférieures inclinées des ergots de la ou des grilles. Cela permet, par l'effet des bras élastiques, de coincer la grille entre l'épaulement du profilé et la face supérieure horizontale de l'évidement, et de supporter le passage de véhicule lourd.

Un troisième objet principal de la présente invention concerne un outil, de préférence métallique, de montage et de démontage rapide de la grille sur son support ou caniveau, comportant au moins deux pièces plates dont l'écartement correspond à celui des troisièmes parties des bras élastiques, de manière à faire levier sur cette troisième partie et à désengager les ergots des évidements, afin de faciliter le montage et le démontage de la grille sur son support ou sur le caniveau.

Cet outil permet le montage et le démontage simple, facile et rapide de la grille, et améliore les conditions d'installation et les opérations d'entretien des caniveaux.

Des caractéristiques et des avantages supplémentaires apparaîtront à la lecture de la description qui va suivre, et en particulier d'un mode de réalisation préféré, illustrée par les figures suivantes :
- La figure 1 représente une vue en coupe de la partie supérieure d'un caniveau selon un mode de réalisation préféré de la présente invention;
- La figure 2 représente une vue du dessus d'une grille selon la présente invention;
- La figure 3 représente une vue en coupe du caniveau de la figure 1 et de la grille de la figure 2 combinés selon la présente invention;
- La figure 4 représente une vue générale d'un outil permettant selon la présente invention, le montage et le démontage de la grille de la figure 2; et
- La figure 5 représente l'utilisation de l'outil de la figure 4 pour le montage et le démontage de la grille de la figure 1 par rapport au caniveau de la figure 2.

Pour plus de clarté, les numéros de référence relatifs à l'un des côtés du caniveau et l'un des côtés longitudinaux de la grille seront munis de l'indice ' alors que l'autre côté du caniveau ou de la grille ne comportera pas cet indice. Les indices a, b et c ajoutés aux numéros de référence indiqueront plusieurs parties d'un même élément situé du même côté longitudinal du caniveau ou de la grille. Les mêmes références sont utilisées dans toutes les figures.

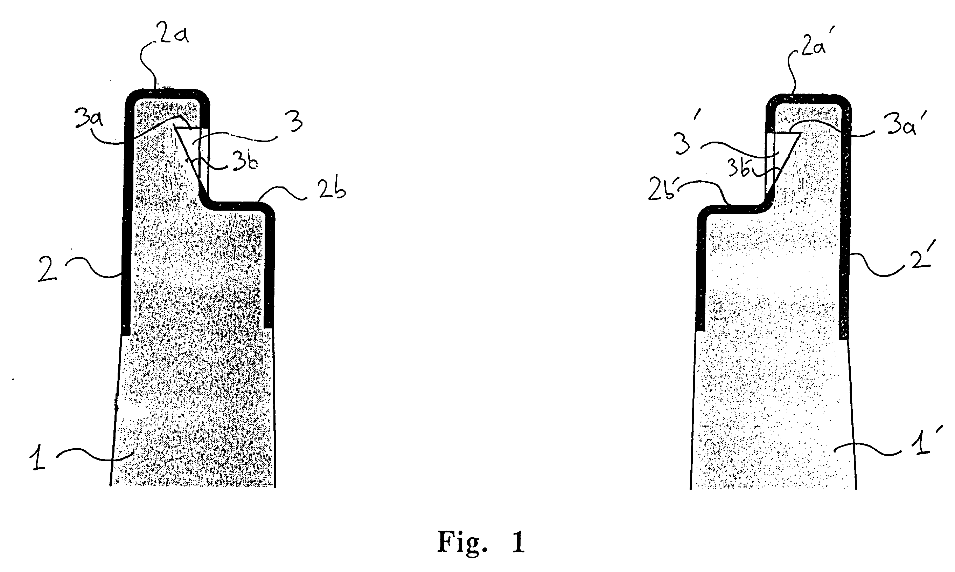

La figure 1 représente une coupe transversale d'un caniveau, de préférence en béton armé, exemple d'application de la grille selon l'invention, comportant un fond non représenté sur la figure et deux parois latérales verticales 1, 1'.

Dans cet exemple, les extrémités supérieures de ces parois verticales 1, 1' sont recouvertes chacune d'un profilé métallique 2 et 2' dont les faces principales forment un épaulement 2b et 2b' qui est destiné à recevoir les bords longitudinaux de grilles, de façon à ce que la surface supérieure des grilles se trouvent au niveau des parties les plus hautes 2a, 2a' des profilés 2, 2'.

Chaque profilé métallique 2, 2' comporte le long de ses parois verticales au-dessus de l'épaulement 2b, 2b' et en alignement, un certain nombre d'évidements 3, 3' s'étendant dans les parois latérales 1, 1' en béton armé du caniveau et prévus pour recevoir chacun un ergot d'une grille.

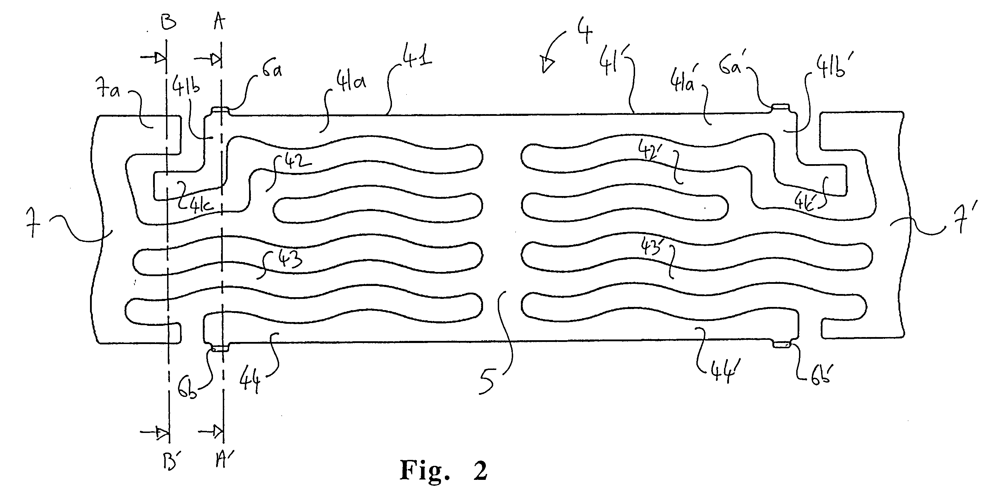

La figure 2 représente une grille 4 selon le même mode de réalisation de l'invention, prévue pour recouvrir le caniveau représenté sur la figure 1. Cette grille 4 de forme générale rectangulaire, est constituée dans cet exemple de deux parties symétriques de barreaux longitudinaux 41, 42, 43 et 44, et 41', 42', 43' et 44', solidaires d'une partie centrale transversale 5 et encadrés de parties extrêmes 7 et 7'. Dans le cas de la figure 2, des ergots 6a, 6b et 6a', 6b' permettant la fixation de la grille à son environnement, sont tous situés sur des barreaux ayant des extrémités libres et constituant des bras élastiques 41, 41' et 44, 44'.

Par la suite, la description de la présente grille va être faite à partir de la partie gauche de celle-ci et s'appliquera bien évidemment par symétrie à la partie droite.

Les extrémités des barreaux longitudinaux 42 et 43 sont solidaires en une partie transversale 7 à l'extrémité gauche de la grille.

Le bras élastique 41 comporte trois parties. La première partie 41a, la plus longue puisque c'est celle dont l'élasticité sera sollicitée pour la fixation de la grille, solidaire de la partie centrale 5 de la grille à l'une de ses extrémités, est munie à son autre extrémité d'un ergot 6a saillant sur le bord vertical extérieur du côté de la grille. Cette première partie 41a est prolongée par une seconde partie 41b dans l'axe transversal (AA') de la grille, laquelle seconde partie forme un coude avec la troisième partie 41c qui constitue l'extrémité libre du bras élastique 41.

Le bras élastique 44 comporte lui aussi un ergot du même type que celui du barreau 41 et approximativement sur le même axe transversal (AA') que celui-ci. Dans le présent mode de réalisation décrit à partir de la figure 2, ce bras 44 comporte une extrémité libre lui conférant une certaine élasticité, mais ce bras pourrait être rigide en étant solidaire de l'extrémité 7 de la grille sans pour cela sortir du cadre de l'invention.

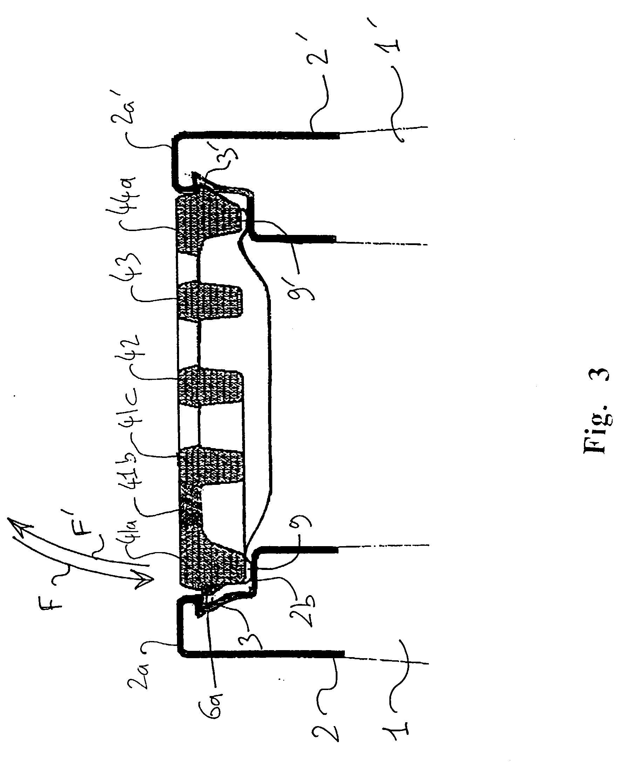

La disposition des ergots 6a, 6b sur les bords longitudinaux verticaux de la grille 4 ainsi que celle des évidements 3, 3' dans les profilés du caniveau de la figure 1, sont faites de manière à ce que, lorsque la grille est apposée sur ce caniveau, ces ergots et évidements puissent coopérer pour fixer par élasticité la grille sur le caniveau comme cela est indiqué sur la figure 3.

Sur cette figure 3, on retrouve les deux parties 1 et 1' du caniveau de la figure 1, recouvertes par les profilés 2 et 2' munis des évidements 3, 3'. Sur ces profilés 2, 2', vient se plaquer la grille 4 dont la figure 3 représente une vue en coupe selon l'axe (AA') de la figure 2.

La mise en place de la grille sur le caniveau selon le mode de réalisation préféré décrit, consiste à engager l'ergot 6b de la grille dans l'évidement 3' du profité d'un côté du caniveau, puis de plaquer, dans le sens de la flèche F, la grille sur le profil du caniveau de manière à ce que l'ergot opposé de l'autre côté de la grille vienne s'engager dans l'évidement 3 du profité opposé. Lorsque la grille est fixée sur le caniveau, elle est maintenue par pression élastique entre l'épaulement 2b, 2b' sur lequel elle repose par l'intermédiaire de pieds 9, 9', et la face supérieure 3a, 3a' de l'évidement. La figure 3 représente l'état de système grille-caniveau entre l'état fermé (ergots tous engagés dans les évidements correspondants) et l'état ouvert (ergots dégagés des évidements).

La largeur de la grille au niveau des ergots est telle que l'élasticité latérale des bras élastiques 41 et 41' du fait de la dimension de leurs parties 41a et 41a', force les ergots dans les évidements et assure ainsi, par l'intermédiaire de ce contact sous pression élastique ergots-évidements, le maintien de la grille dans toutes tes directions, en évitant qu'il y ait du jeu entre la grille et le caniveau.

La surface supérieure de l'ergot peut être inclinée de manière à éviter un éventuel jeu entre la grille et son support. D'autre part, les barreaux porteurs du contact avec le caniveau peuvent être légèrement courbés vers le haut afin d'augmenter la pression des contacts avec les caniveaux pris entre l'épaulement 2b, 2b' des profilés 1, 1' et les faces horizontales supérieures des évidements 3, 3'.

De préférence, les ergots 6a, 6b ont un profil qui vient épouser celui des évidements 3, 3' des figures 1 et 3, dans lequel ils viennent s'enclencher. Ces ergots ont un côté horizontal et un côté incliné, le contact sous pression élastique entre le côté incliné des ergots 6a, 6b et celui 3b, 3b' des évidements 3, 3' se traduit par une poussée verticale de la grille qui vient plaquer les faces horizontales des ergots sur les faces horizontales 3a, 3a' des évidements 3, 3'. La grille est ainsi maintenue fermement sur le caniveau.

Cette grille est de préférence métallique et en fonte, et le caniveau en béton armé.

D'autres modes de réalisation de la présente invention sont envisageables, par exemple les évidements et ergots peuvent avoir différentes formes sans sortir du cadre de l'invention. D'autre part, la partie 41a responsable de l'élasticité et porteuse de l'ergot du barreau 41, peut avoir différentes longueurs en fonction de l'élasticité désirée. Le barreau 44 opposé au barreau 41 peut avoir l'extrémité portant l'ergot 6b libre comme représenté sur la figure 2 ou non.

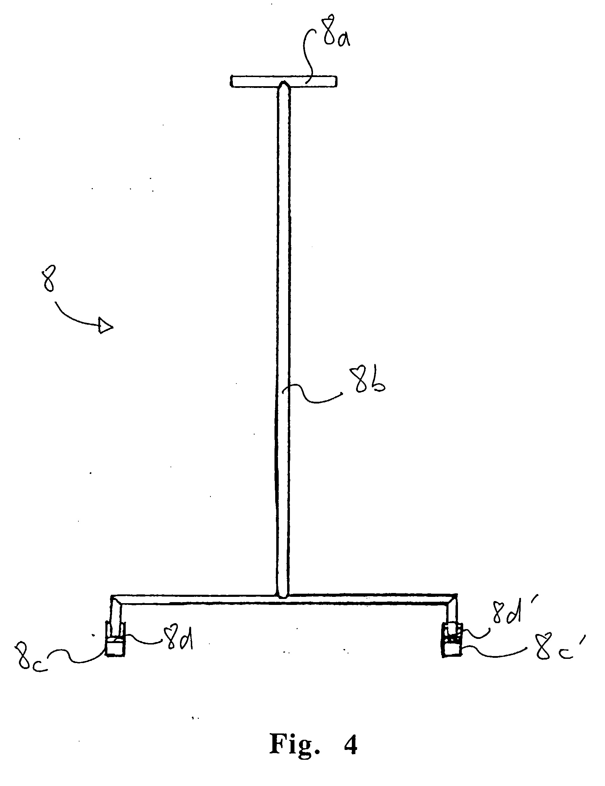

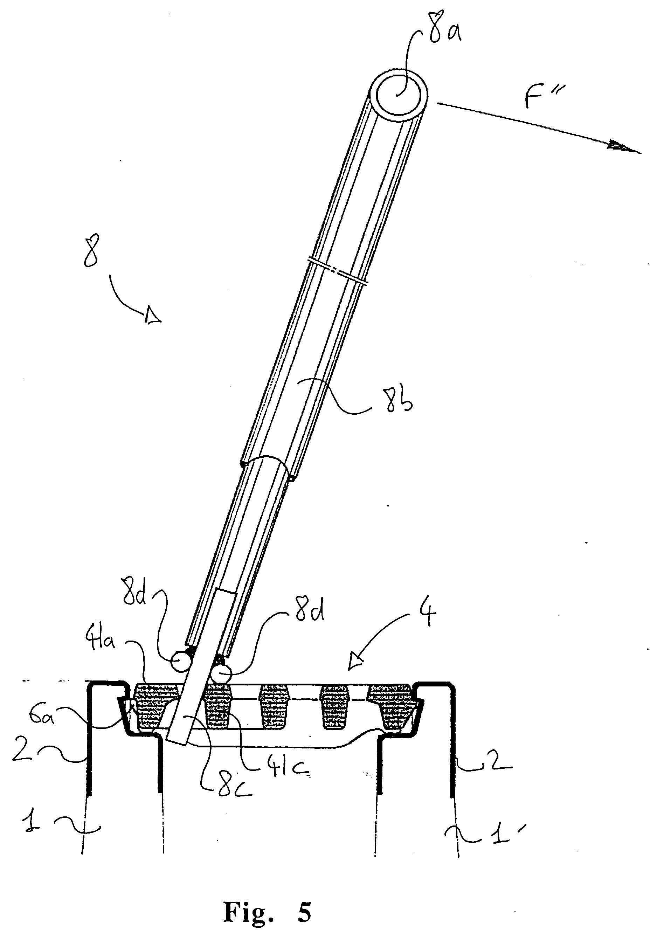

Pour le montage et le démontage de la grille est prévu un outil représenté sur la figure 4. Celui-ci coopère avec la grille selon l'invention comme le montre la figure 5 dans laquelle le caniveau et la grille sont vus en coupe selon l'axe (BB') de la figure 2. Cet outil ainsi que la coopération avec la grille et le caniveau sont décrits ci-après.

Comme le montre la figure 5, un moyen de montage et de démontage 8 du type "pied de biche" est constitué d'une poignée 8a et d'un bras de levier 8b solidaires de deux pièces plates 8c et 8c', chacune de ces pièces ayant un palier 8d sur lequel va s'exercer la force du levier. Cet outil est de préférence métallique et en fer.

Pour effectuer le montage de la grille sur le caniveau, les ergots 6b, 6b' de la grille sont engagés par le manutentionnaire dans les évidements 3' correspondants du caniveau, et les pièces 8c et 8c' sont placées respectivement dans l'espacement entre les parties 41c, 41c' des barreaux 41, 41' et les parties 6, 6' de la grille, l'écartement entre les deux pièces plates 8c et 8c' correspondant à l'écartement sur la grille entre les parties 41c et 41c' des bras 41 et 41'.

En agissant alors sur l'outil 8 selon le sens de la flèche F'' de la figure 5, par action de levier sur les parties libres 41c et 41c' des bras élastiques 41 et 41', ces derniers sont forcés élastiquement vers l'intérieur de la grille et permettent le placage de la grille sur les profilés 2 et 2'. Une fois la grille dans sa position horizontale sur les profilés 2 et 2', en relâchant la pression sur l'outil 8, les bras élastiques reprennent leur position initiale et les ergots 6a et 6a' s'engagent en contact avec les évidements correspondants 3 et 3'. La pression élastique des bras 41 et 41' sur les profilés au travers des contacts ergots-évidements assure le maintien de la grille sur les caniveaux sans jeu. Le démontage de la grille selon le sens de ta flèche F' de la figure 3 s'effectue tout aussi facilement par la même opération pour désengager les ergots des évidements et retirer la grille.

L'effet de levier peut être obtenu par rapport au profilé 2, la longueur des pièces plates 8c et 8c' étant adaptée pour s'y appuyer, ou bien par rapport à la partie 7a de l'élément 7 de la grille, ce dernier constituant au travers des barreaux 42 et 43, le corps rigide de la grille. D'autre part, ces plaques peuvent être recourbées afin de faciliter l'opération de montage ou de démontage et éventuellement servir de porte grille pour le montage et le démontage.

Au-delà de son application à des caniveaux en béton, la grille selon la présente invention peut être utilisée dans d'autres environnements, dans d'autres supports nécessitant une paroi de grille solide et bien fixée, et pouvant être montée et démontée rapidement et facilement.

## Revendications

1. Grille (4) devant être fixée de manière amovible dans un support (11'), caractérisée en ce qu'elle comporte au moins deux barreaux (41, 41') ayant une extrémité libre (41c, 41c') formant deux bras élastiques longitudinaux au moins essentiellement dans le plan de la grille, eux-mêmes comportant trois parties : une première partie (41a, 41a') formant un côté de la grille (4), dont l'une des extrémités est solidaire du corps (5) de la grille (4), l'autre extrémité étant munie d'un ergot (6a, 6a') prévu pour coopérer avec le support (1, 1') pour y maintenir la grille (4) grâce à la force du bras élastique (41, 41') sur le support (1, 1'), une deuxième partie (41b, 41b') formant un coude avec la première (41a, 41a'), et une troisième partie (41c, 41c') formant un coude avec la seconde (41b, 41b').

2. Grille selon la revendication 1, caractérisée en ce que les ergots (6a, 6a') sont constitués d'une face supérieure horizontale et d'une face inférieure inclinée.

3. Grille selon l'une quelconque des revendications précédentes, caractérisée en ce qu'elle comporte, sur son côté opposé au côté des bras élastiques longitudinaux (41, 41'), au moins deux ergots (6b, 6b').

4. Grille selon la revendication 3, caractérisée en ce que les ergots (6b, 6b') du côté opposé sont situés chacun sur un bras élastique longitudinal (44, 44').

5. Grille selon l'une quelconque des revendications précédentes, caractérisée en ce qu'elle est en fonte.

6. Grille selon l'une quelconque des revendications 1, 3, 4 et 5, caractérisée en ce que la face supérieure des ergots (3, 3') est inclinée.

7. Grille selon l'une quelconque des revendications précédentes, caractérisée en ce que les bras élastiques longitudinaux (41, 41') sont recourbés vers le haut.

8. Caniveau comportant un fond et deux parois latérales (1, 1') dont les extrémités supérieures sont recouvertes d'un profilé métallique (2, 2') ayant un épaulement (2b, 2b') destiné à recevoir les bords longitudinaux (41, 41') d'une ou de plusieurs grilles (4), caractérisé en ce que lesdits profilés métalliques (2, 2') comportent dans leurs parois verticales au-dessus de leurs épaulements (2b, 2b'), des évidements (3, 3') s'étendant dans les parois en béton du caniveau, et en ce que la ou les grilles (4) possèdent au moins deux barreaux ayant une extrémité libre formant deux bras élastiques (41, 41'), ces bras élastiques étant essentiellement dans le plan de la grille et comportant au moins trois parties : une première partie (41a, 41a') formant un côté de la grille (4), dont l'une des extrémités est solidaire du corps (5) de la grille (4), l'autre extrémité comportant un ergot (6a, 6a') prévu pour coopérer avec les évidements (3, 3') du caniveau, ces bras (41, 41') et/ou ces ergots (6a, 6a') possédant une forme telle que la coopération des ergots (6a, 6a') avec les surfaces intérieures (3a, 3a', 3b, 3b') des évidements (3, 3') produise un effet élastique de façon à ce que la grille (4) soit maintenue élastiquement entre la surface supérieure de l'évidement (3a, 3a') et l'épaulement (2b, 2b') du profilé (2, 2'), une deuxième partie (41b, 41b') formant un coude avec la première (41a, 41a'), et une troisième partie (41c, 41c') formant un coude avec la deuxième (41b, 41b').

9. Caniveau selon la revendication 8, caractérisé en ce qu'il reçoit une grille (4) selon l'une quelconque des revendications 2 à 7.

10. Caniveau selon la revendication 8, caractérisé en ce que ses évidements (3, 3') sont constitués d'une face supérieure horizontale (3a, 3a') et d'une face inférieure inclinée (3b, 3b') épousant les ergots (6a, 6a') de la ou des grilles (4) constitués d'une face supérieure horizontale et d'une face inférieure inclinée.

11. Caniveau selon l'une quelconque des revendications 8 à 10, caractérisé en ce qu'il est en béton armé.

12. Outil de montage et de démontage (8) de grille (4), caractérisé en ce qu'il comporte au moins deux pièces plates (8c, 8c') solidaires dont l'écartement correspond à celui des troisièmes parties (41c, 41c') des bras élastiques (41, 41') des grilles des revendications 1 à 7, de manière à faire levier sur cette troisième partie (41c, 41c') pour désengager et engager les ergots (6a, 6a') des évidements (3, 3') du support dans lequel doit être appliquée la grille (4).

13. Outil selon la revendication 12, caractérisé en ce qu'il est en fer.
